# EUROPEAN PATENT SPECIFICATION

(11) **EP 3 253 974 B1**
(45) Date of publication and mention of the grant of the patent: **02.12.2020**
(21) Application number: 16708485.4
(22) Date of filing: 26.01.2016
(51) Int. Cl.: F16B 5/02, F16B 33/00, F16B 39/02, F16B 41/00

(54) **COMPENSATION NUT**
KOMPENSATIONSMUTTER
ÉCROU DE COMPENSATION

(30) Priority: 03.02.2015 ES 201500080
(43) Date of publication of application: 13.12.2017
(73) Proprietor: Illinois Tool Works Inc., Glenview, IL 60025 (US)
(72) Inventor: ARISA BUSQUETS, Jaume, E-08206 Sabadell (Barcelona) (ES)
(74) Representative: HGF
(86) International application number: PCT/US2016/014906
(87) International publication number: WO 2016/126462

(56) References cited:
- EP-A1- 2 796 729
- WO-A1-00/57070
- WO-A1-94/29603
- WO-A1-2008/129854
- WO-A1-2012/137706
- DE-U1-202013 005 582
- US-A- 3 737 355
- US-A- 4 033 393
- US-A1- 2014 133 934

## Description

### FIELD OF THE INVENTION

The present invention develops various features of "compensation" nuts, which are designed to fasten an application, maintaining a variable distance between the surface or panel where the application is installed and the supporting element or chassis where said nut is fixed, with the particular characteristic that said features improve the operation and efficacy of the compensation nut overall by allowing a movable blocking position for the path of the nut.

### BACKGROUND

There are known compensation nuts, the purpose of which is to fasten an application to a panel or surface for supporting said application and which make it possible to preserve the variable space that exists between said panel and the frame or supporting surface where said nut is anchored.

Succinctly, said nuts incorporate a hollow interior screw. This screw is screwed onto the thread of the nut, which is a reverse thread; that is to say, the movement of the screw toward the right causes it to withdraw and turning toward the left causes the screw to advance into the interior of the nut.

This hollow screw has, within, engaging parts so that, when the screw used to fasten the application is inserted, the turning of this screw for fastening the application also entrains - turns - the screw of the compensation nut.

The known operation of said type of nuts means that when the application screw is threaded into the hollow of the screw of the compensation nut, this turning, which is toward the right, first gives rise, as mentioned previously, to the withdrawal of the screw of the compensation nut until all the separation space that exists between the panel for supporting the application and the frame or chassis of the vehicle where the compensation nut is fastened is covered.

The continuation of the action of tightening the screw for fastening the application gives rise, second, to the advance of said screw inside the screw of the compensation nut and the fastening of the application to be installed.

Patent EP2796729 describes a compensation nut of the type described, in which the screw of the compensation nut has interior engaging parts formed by lugs projecting from the surface toward the axial axis of said screw.

This type of nut is provided in boxes that group together a plurality thereof, and, upon taking them, the operator places them at the installation location and at the same time takes a screw for fastening an application and the support of the application and inserts said screw in the hollow of the screw of the compensation nut. Using an automatic screwing machine, in a single operation the operator achieves not only the expansion of the compensation nut but also the fastening of the support for the application thereto.

This type of operation is repeated numerous times, and it is desired to perform it as safely and as rapidly as possible. An effective, simple process has multiple benefits owing to the number of repetitions thereof on the assembly line and represents, overall, a significant saving in terms of manufacturing costs.

The problem encountered with the known technique is that, owing to the vibrations and shaking that occur during transportation and/or storage of the pieces, the screw of the compensation nut usually separates from its nut, or the screw simply rises and is not in its service position at a minimum height from said compensation nut. This means that the installer of the compensation nut has to fit the nut, threading the screw into it until the minimum height position of the assembly is achieved.

Obviously, this is a tedious drawback and represents decreased efficiency on the assembly line that the industry is attempting to resolve.

The most immediate response is to overmold the piece with two plastic crowns, one on the nut and another on the screw, which incorporate a flange/antagonistic counterstop set likewise produced from the same plastic.

However, this simple solution ultimately does not function owing to the problem of the accumulation of the effects of the vibrations that said solution is unable to overcome owing to its lack of elasticity. As a result of shaking, the flange is loosely mounted on the antagonistic stop, with the drawback that subsequent shaking may combine with the preceding trend and end by preventing the braking effect created and loosen the screw/nut connection, leading to the drawbacks mentioned previously.

The service position for a compensation nut - the fitting position - is the position in which the compensation screw is totally inserted in the nut and the height of the gap to be covered between frame and panel is the minimum according to the specifications of the piece. In this situation, the height of the compensation nut is the minimum, and it can be seen that it is by maintaining a slight distance vis-a-vis the possible path that over-tightening and fixing of the screw in the nut is avoided. It must be possible for the required blocking of the service position to be broken with a force such that accidental disassembly thereof, through vibrations, is avoided, but easy installation thereof is allowed.

Under the working conditions of the current automobile industry, it is customary to pre-fit pieces and parts that are then transported to final fitting centers or to remote intermediate assembly points. Consequently, the pre-fitted piece must be able to withstand vibrations and impacts deriving from transportation, and must do so without becoming disassembled.

In the above description of the current situation, although the flange is able to overcome the stop, by bending, in order to allow correct operation of the compensation nut when it receives a suitable force, what happens is that even smaller forces, for example those deriving from vibrations during transportation, may initiate this flexing of the flange, while a further vibration promotes this flexing and another, new vibration may lead to the stop being overcome. The compensation nut may be disconnected subsequently, the blocking mechanism described having been of no use, with all the concomitant drawbacks.

WO2012137706A1 discloses a fastening tool assembly having a spacer threaded into the inner sides of a nut member mounted on a mounting rail of a railway car body, and an interior member set in place. In this state, the spacer is rotated to adjust the amount of protrusion from the fastening tool assembly, and the spacer is brought in contact with the interior member.

One of the principal objects of the present invention is to overcome said drawbacks by providing a blocking mechanism for the compensation nut that is effective in the face of repeated vibrations deriving from transportation or storage of said pieces packaged in their service position.

These and other advantages of the present invention will become more apparent in the course of the following description thereof.

### BRIEF DESCRIPTION OF THE INVENTION

The present invention is a compensation nut with the features of claim 1 and develops compensation nut features, said compensation nuts being those used as accessory-fastening elements, for example in the automobile industry, and which aim to bridge a gap between frame and panel for fastening an application, in which the size of said gap may be variable.

The principal feature described by the present invention relates to the establishment of a releasable blocking position of the compensation nut, in the service position thereof. This is, furthermore, an economic, simple and elastic blocking, such that the whole recovers perfectly from the vibrations without adversely affecting the connection obtained by said blocking.

This blocking can be effected by a silane modified polymeric part that adheres to the compensation nut - jointly to the nut and to the screw - maintaining an economic connection of low cost that avoids the addition of supplementary pieces and is, moreover, elastic.

All the objects pursued by the present invention have thus been achieved.

### BRIEF EXPLANATION OF THE DRAWINGS

For a better understanding of the invention, the present description is accompanied by a sheet of drawings provided solely by way of illustration and not to limit the invention.
Figure 1 is a perspective representation of a composition nut, according to one of the possible embodiments of the present invention, in the closed or service position thereof, when it has less height.
Figure 2 is a front view of the compensation nut of the preceding embodiment, and on this occasion with the compensation nut expanded, with a height greater than that of the service height as a result of withdrawal of the screw.
Figure 3 is a perspective view of a further possible exemplary embodiment of the present invention, the compensation nut being in its service position, and the block characteristic of the present invention being shown.

### DETAILED EXPLANATION OF THE INVENTION

The present invention comprises certain features of compensation nuts, the compensation nuts being those used as accessory-fastening elements, for example in the automobile industry, and which aim to bridge a gap between frame and panel for fastening an application, in which the size of said gap may be variable.

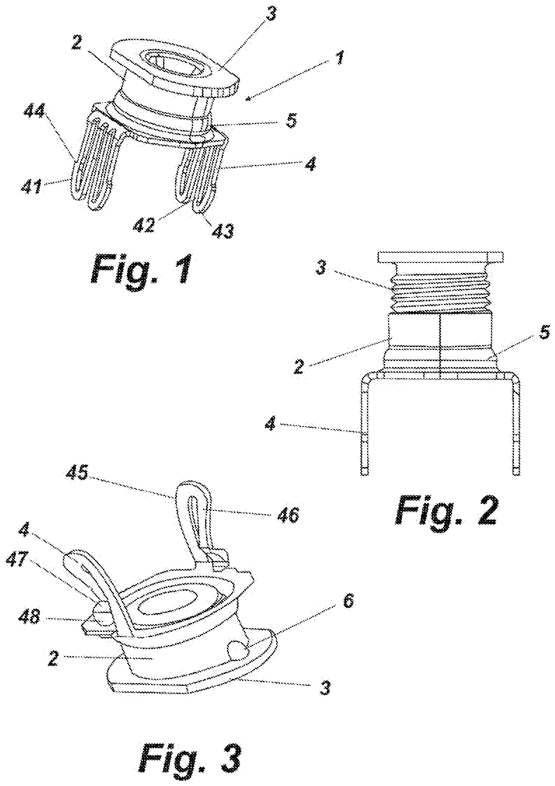

Figures 1 and 2 show an exemplary embodiment of a compensation nut of the type used by the present invention, Figure 1 showing the service position and Figure 2 showing the expanded, withdrawn position, covering a greater height.

This type of compensation nut (1) is formed by a nut (2) and a hollow screw (3). The nut (2) in the embodiments shown has a base with lugs (4) for fastening to the frame for supporting the compensation nut and, emerging from said base, a cylinder with interior threading. In the embodiments shown, there is a connection between said cylinder and said base by means of a body of revolution of a segment of an arc of a circle, said dome (5) providing additional elastic reserve for said nut (2).

The lugs (4) for fastening to the frame of the vehicle may be of different shapes, as shown by the two embodiments shown in the figures. In Figure 1, the lugs are springs aligned in pairs, on either side of the nut, configured in order to engage in a groove of the panel or frame of the vehicle and to exert tension against the sides thereof.

These lugs (4) in the embodiment shown in the drawings are formed by two descending portions (41 and 42) connected at their end (43), forming a spring with lateral action. These lugs are inserted into holes that are approximately rectangular narrow grooves, such that the springs mentioned act against the short sides of said grooves on the fastening surfaces.

The descending portion (41) of said lugs (4), which is exterior and makes contact against the edge of the groove or hole in the panel, has a step (44) or recess that acts against the panel and exerts a retention action vis-a-vis the panel in the face of forces extracting the compensation nut.

By contrast, the embodiment in Figure 3 shows other lugs (4), which are likewise elastic lugs but which are in an arrangement where their behavior is one of flexing and pressing against the face opposite the fastening surface or frame where said nut (2) is fastened.

These lugs (4) are embodied as a descending portion (45) that extends, by inverting its direction, as another, ascending portion (46). The end of said lug (4) has the approximate shape of an "L", supporting a planar part (47) approximately parallel to the surface of the fastening panel and a stop (48) perpendicular to said surface, which makes contact laterally against the edges of the hole in the fastening panel.

The work of the perpendicular end (48) of said lug (4) against the edge of the hole in the support panel is against the long side of the groove of said approximately rectangular hole, unlike the preceding embodiment in which the tension was against the short sides of said groove.

The two embodiments allow firm gripping of the support panel, under tension, such that they allow satisfactory securing and transportation of the pre-installed piece to the location of the assembly line for the installation of said element or part in the vehicle, suitably withstanding vibrations deriving from transportation without said pre-installed position becoming loose.

As is known, the nut (2) is threaded in the opposite direction, i.e. when the screw (3) is threaded to the right - in the direction toward the right - instead of advancing it withdraws, and vice versa. This is so that when a bolt or screw for fastening an application is screwed inside the screw (2), the entrainment turning of the screw (2) - in the direction toward the right - brought about by the installation of the bolt or screw for installing an application expands, first, the compensation nut until the space to be bridged in order subsequently to fasten the application is totally covered.

The principal feature of the present invention consists in providing at least one adhesive and elastic block (6), in the preferred embodiment of the invention made from silane modified polymer, which is a resin that makes it possible to keep the nut (2) and the screw (3) connected in their service position.

Said installation of said block (6) is effected automatically and overcomes the difficulties described above deriving from more complex and inefficient solutions necessitating recourse to different pieces.

The invention makes provision for various configurations, adapted to different practical solutions in which the invention may be applied, by adapting the mechanical properties of the adhesive block (6). That is to say, a rupture value for said block (6) having been established for each application, this value may be different to suit each exemplary embodiment.

In a general case, the rupture clamping torque is set at 0.2 Nm. In other embodiments, for example, it is set preferably at 0.4 Nm.

The configuration of said block makes it possible to maintain the nut (2) and screw (3) connection for clamping torques of less than approximately 0.4 Nm and allows the breaking of said connection for clamping torques of 0.4 Nm or above.

This connection is elastic owing to the very nature of the material used, which is a synthetic resin. The principal advantage thereof, as mentioned previously, is that in the face of shaking or vibration the nut (2) and the screw (3) are able to move slightly in relation to one another, but the block (6) acts as a spring and restores the service position by absorbing the energy of said shaking.

It must be understood that the structural nature of said block (6) has been configured in order to have the elastic property under conditions that allow it to absorb the vibrations received at the same time as it recovers its original, previous position after shaking or vibration.

This is owing to the elastic hysteresis of said block (6), in which the recovery of the position prior to a small deformation takes place while absorbing energy, thereby damping the impact. The difference between the energy received in order to deform the block (6) and that returned by said block, upon recovering its initial position, is absorbed and dissipated within the elastic material without being transmitted to the rest of the compensation nut. This allows optimum functioning of said block (6) within the performance levels required by the present invention with a view to absorbing vibrations and shaking.

Obviously, the invention may be implemented with different types of adhesive materials, simply relating to the mechanical properties required for each specific embodiment.

In the preferred embodiment of the present invention, said block (6) has a Shore A hardness of approximately 55, with an elongation at break in accordance with standard DIN 53504 of approximately 250%, its tensile strength likewise being in accordance with said standard DIN 53504, at approximately 3.0 MPa.

In accordance with the present description, the features described in the present invention for compensation nuts achieve all the inventive objects pursued, providing blocking of the compensation nut (1) in a pre-set position, said blocking furthermore being elastic, recovering the initial relational position between the nut (2) and the compensation screw (3) by absorbing some of the energy of the vibration received.

In another of the objects of the present invention, the fastening of the nut (2) and of the assembly of the compensation nut to the element for supporting and preliminary fitting of an application is robust and likewise elastic owing to the design of the lugs (4), which are robust and elastic, said lugs being thoroughly secured to the hole provided in said support element, thereby substantially enhancing the performance of compensation nuts previously used in the automobile industry.

It is understood that, in the present case, such details of finish and form may be varied provided the essence of the invention is not modified.

## Claims

1. A COMPENSATION NUT, compensation nuts being those suitable for use as accessory-fastening elements, for example in the automobile industry, and which aim to bridge a gap between frame and panel for fastening an application, in which the size of said gap may be variable, said compensation nut (1) including a nut (2) and a compensation bolt or screw (3), establishing a service or closed position for said compensation nut (1), in which the height or expansion between said nut (2) and said screw (3) has a pre-set value by means of at least one block (6) of adhesive and elastic material for absorbing received shaking and vibrations during transportation and/or storage of the compensation nut (1), which enables the connection between the nut (2) and the bolt or screw (3) to be maintained, **characterized in that** said at least one block (6) is placed on the external wall of the nut (2) and on the head of the screw (3).

2. THE COMPENSATION NUT as claimed in the preceding claim, **CHARACTERIZED in that** said block (6) maintains the connection between said nut (2) and said screw (3) for torques less than a rupture value pre-set in each application, the connection being broken when said value is exceeded.

3. THE COMPENSATION NUT as claimed in the preceding claim, **CHARACTERIZED in that** said rupture value is no less than 0.2 Nm, allowing the connection to be broken for clamping torques above said value.

4. THE COMPENSATION NUT as claimed in any one of the preceding claims, **CHARACTERIZED in that** said block (6) makes it possible to maintain the connection between said nut (2) and said bolt or screw (3) for clamping torques of less than approximately 0.4 Nm and allows the breaking of said connection for clamping torques of approximately 0.4 Nm or above.

5. THE COMPENSATION NUT as claimed in any one of the preceding claims, **CHARACTERIZED in that** said block (6) is made from synthetic adhesive resin.

6. THE COMPENSATION NUT as claimed in the preceding claim, **CHARACTERIZED in that** said block (6) is made from silane modified polymeric material.

7. THE COMPENSATION NUT as claimed in the preceding claim, **CHARACTERIZED in that** said block (6) has an elongation at break of at least 250% or above, in accordance with standard DIN 53504.

8. THE COMPENSATION NUT as claimed in any one of the preceding claims, **CHARACTERIZED in that** said nut (2) has a cylinder with interior threading, there being a connection dome (5) between the base thereof and said cylinder configured in order to provide elastic strength to said nut (2).

9. THE COMPENSATION NUT as claimed in any one of the preceding claims, **CHARACTERIZED in that** said compensation nut (1) is formed by a nut (2) that includes flexible and elastic lugs (4) for fastening to a fastening surface or frame.

10. THE COMPENSATION NUT as claimed in the preceding claim, **CHARACTERIZED in that** each of said lugs (4) is formed by two descending portions (41 and 42) that are connected at their end (43), creating a spring with lateral action.

11. THE COMPENSATION NUT as claimed in the preceding claim, **CHARACTERIZED in that** the descending portion, which is exterior (41) and makes contact against the edge of the hole in the fastening surface, has a locking step (44).

12. THE COMPENSATION NUT as claimed in claim 9, **CHARACTERIZED in that** each of said lugs (4) is formed by a descending portion (45) that extends in the opposite direction as a further portion, which is an ascending portion (46).

13. THE COMPENSATION NUT as claimed in the preceding claim, **CHARACTERIZED in that** the end of said lugs (4) terminates in the approximate shape of an "L", supporting a planar part (47) approximately parallel to the surface of the fastening panel and a stop (48) perpendicular to said surface, which makes contact against the edges of the hole in the fastening panel.

14. THE COMPENSATION NUT as claimed in any one of the preceding claims, **CHARACTERIZED in that** said compensation nut is metallic and produced with heat- treated carbon steel.

15. THE COMPENSATION NUT as claimed in any one of the preceding claims, **CHARACTERIZED in that** said compensation nut is galvanized.

## Patentansprüche

1. Ausgleichsmutter, wobei es sich bei Ausgleichsmuttern um jene handelt, die zur Verwendung als Zubehörbefestigungselemente beispielsweise in der Automobilindustrie geeignet sind und darauf abzielen, einen Spalt zwischen Rahmen und Platte zur Befestigung einer Anwendung zu überbrücken, wobei die Größe des Spalts variabel sein kann, wobei die Ausgleichsmutter (1) eine Mutter (2) und einen Ausgleichsbolzen oder eine Ausgleichsschraube (3) aufweist, die eine Dienst- oder geschlossene Position für die Ausgleichsmutter (1), in der die Höhe oder die Expansion zwischen der Mutter (2) und der Schraube (3) einen voreingestellten Wert hat, mittels mindestens eines Blocks (6) aus klebendem und elastischem Material zum Absorbieren von Rütteln und Schwingungen, die während des Transports und/oder der Lagerung der Ausgleichsmutter (1) aufgenommen worden sind, etablieren, wodurch die Verbindung zwischen der Mutter (2) und dem Bolzen oder der Schraube (3) aufrechterhalten werden kann, **dadurch gekennzeichnet, dass** der mindestens eine Block (6) an der Außenwand der Mutter (2) und an dem Kopf der Schraube (3) platziert ist.

2. Ausgleichsmutter nach dem vorhergehenden Anspruch, **dadurch gekennzeichnet, dass** der Block (6) die Verbindung zwischen der Mutter (2) und der Schraube (3) für Drehmomente von weniger als einem in jeder Anwendung voreingestellten Bruchwert aufrechterhält, wobei die Verbindung unterbrochen wird, wenn der Wert überschritten wird.

3. Ausgleichsmutter nach dem vorhergehenden Anspruch, **dadurch gekennzeichnet, dass** der Bruchwert nicht weniger als 0,2 Nm beträgt, wobei die Verbindung für Klemmmomente über dem Wert unterbrochen werden kann.

4. Ausgleichsmutter nach einem der vorhergehenden Ansprüche, **dadurch gekennzeichnet, dass** der Block (6) die Aufrechterhaltung der Verbindung zwischen der Mutter (2) und dem Bolzen oder der Schraube (3) für Klemmmomente von weniger als ungefähr 0,4 Nm ermöglicht und das Unterbrechen der Verbindung für Klemmmomente von ungefähr 0,4 Nm oder darüber gestattet.

5. Ausgleichsmutter nach einem der vorhergehenden Ansprüche, **dadurch gekennzeichnet, dass** der Block (6) aus synthetischem Klebstoffharz hergestellt ist.

6. Ausgleichsmutter nach dem vorhergehenden Anspruch, **dadurch gekennzeichnet, dass** der Block (6) aus silanmodifiziertem polymeren Material hergestellt ist.

7. Ausgleichsmutter nach dem vorhergehenden Anspruch, **dadurch gekennzeichnet, dass** der Block (6) eine Bruchdehnung von mindestens 250% oder darüber gemäß der DIN-Norm 53504 hat.

8. Ausgleichsmutter nach einem der vorhergehenden Ansprüche, **dadurch gekennzeichnet, dass** die Mutter (2) einen Zylinder mit Innengewinde hat, wobei zwischen der Basis davon und dem Zylinder eine Verbindungskuppel (5) vorliegt, die dazu ausgestaltet ist, der Mutter (2) elastische Festigkeit zu verleihen.

9. Ausgleichsmutter nach einem der vorhergehenden Ansprüche, **dadurch gekennzeichnet, dass** die Ausgleichsmutter (1) durch eine Mutter (2) gebildet ist, die flexible und elastische Laschen (4) zur Befestigung an einer Befestigungsfläche oder einem Befestigungsrahmen aufweist.

10. Ausgleichsmutter nach dem vorhergehenden Anspruch, **dadurch gekennzeichnet, dass** jede der Laschen (4) durch zwei herabgehende Abschnitte (41 und 42) gebildet ist, die an ihrem Ende (43) verbunden sind, wodurch eine Feder mit seitlicher Wirkung entsteht.

11. Ausgleichsmutter nach dem vorhergehenden Anspruch, **dadurch gekennzeichnet, dass** der herabgehende Abschnitt, der außen (41) liegt und mit dem Rand des Lochs in der Befestigungsfläche in Kontakt kommt, eine Verriegelungsstufe (44) hat.

12. Ausgleichsmutter nach Anspruch 9, **dadurch gekennzeichnet, dass** jede der Laschen (4) durch einen herabgehenden Abschnitt (45) gebildet ist, der sich im Vergleich zu einem weiteren Abschnitt, der ein hinaufgehender Abschnitt (46) ist, in die entgegengesetzte Richtung erstreckt.

13. Ausgleichsmutter nach dem vorhergehenden Anspruch, **dadurch gekennzeichnet, dass** das Ende der Laschen (4) ungefähr L-förmig endet und einen planaren Teil (47) ungefähr parallel zu der Oberfläche der Befestigungsplatte und einen Anschlag (48) senkrecht zu der Oberfläche stützt, was mit den Rändern des Lochs in der Befestigungsplatte in Kontakt kommt.

14. Ausgleichsmutter nach einem der vorhergehenden Ansprüche, **dadurch gekennzeichnet, dass** die Ausgleichsmutter metallisch ist und mit wärmebehandeltem Kohlenstoffstahl hergestellt ist.

15. Ausgleichsmutter nach einem der vorhergehenden Ansprüche, **dadurch gekennzeichnet, dass** die Ausgleichsmutter verzinkt ist.

## Revendications

1. Écrou de compensation, les écrous de compensation étant ceux appropriés pour être utilisés comme éléments de fixation d'accessoire, par exemple dans l'industrie automobile, et qui visent à combler un espace entre un cadre et un panneau pour fixer une application, la taille dudit espace pouvant être variable, ledit écrou de compensation (1) comprenant un écrou (2) et un boulon ou une vis de compensation (3), établissant une position de service ou fermée pour ledit écrou de compensation (1), dans laquelle la hauteur ou l'expansion entre ledit écrou (2) et ladite vis (3) a une valeur préréglée au moyen d'au moins un bloc (6) de matériau adhésif et élastique pour absorber les secousses et vibrations reçues pendant le transport et/ou le stockage de l'écrou de compensation (1), ce qui permet à la liaison entre l'écrou (2) et le boulon ou la vis (3) d'être maintenue, **caractérisé en ce que** ledit au moins un bloc (6) est placé sur la paroi externe de l'écrou (2) et sur la tête de la vis (3).

2. Écrou de compensation selon la revendication précédente, **caractérisé en ce que** ledit bloc (6) maintient la liaison entre ledit écrou (2) et ladite vis (3) pour des couples inférieurs à une valeur de rupture préréglée dans chaque application, la liaison étant rompue lorsque ladite valeur est dépassée.

3. Écrou de compensation selon la revendication précédente, **caractérisé en ce que** ladite valeur de rupture n'est pas inférieure à 0,2 Nm, permettant à la liaison d'être rompue pour des couples de serrage supérieurs à ladite valeur.

4. Écrou de compensation selon l'une quelconque des revendications précédentes, **caractérisé en ce que** ledit bloc (6) permet de maintenir la liaison entre ledit écrou (2) et ledit boulon ou vis (3) pour des couples de serrage inférieurs à environ 0,4 Nm et permet la rupture de ladite liaison pour des couples de serrage d'environ 0,4 Nm ou plus.

5. Écrou de compensation selon l'une quelconque des revendications précédentes, **caractérisé en ce que** ledit bloc (6) est en une résine adhésive synthétique.

6. Écrou de compensation selon la revendication précédente, **caractérisé en ce que** ledit bloc (6) est en un matériau polymère modifié au silane.

7. Écrou de compensation selon la revendication précédente, **caractérisé en ce que** ledit bloc (6) a un allongement à la rupture d'au moins 250 % ou plus, conformément à la norme DIN 53504.

8. Écrou de compensation selon l'une quelconque des revendications précédentes, **caractérisé en ce que** ledit écrou (2) a un cylindre avec un filetage intérieur, un dôme de liaison (5) se trouvant entre la base de celui-ci et ledit cylindre conçu pour fournir une force élastique audit écrou (2).

9. Écrou de compensation selon l'une quelconque des revendications précédentes, **caractérisé en ce que** ledit écrou de compensation (1) est formé par un écrou (2) qui comprend des pattes flexibles et élastiques (4) pour la fixation à un cadre ou une surface de fixation.

10. Écrou de compensation selon la revendication précédente, **caractérisé en ce que** chacune desdites pattes (4) est formée de deux parties descendantes (41 et 42) qui sont reliées au niveau de leur extrémité (43), créant un ressort à action latérale.

11. Écrou de compensation selon la revendication précédente, **caractérisé en ce que** la partie descendante, qui est extérieure (41) et qui fait contact contre le bord du trou dans la surface de fixation, a un cran de blocage (44).

12. Écrou de compensation selon la revendication 9, **caractérisé en ce que** chacune desdites pattes (4) est formée par une partie descendante (45) qui s'étend dans la direction opposée comme une autre partie, qui est une partie ascendante (46).

13. Écrou de compensation selon la revendication précédente, **caractérisé en ce que** l'extrémité desdites pattes (4) se termine en forme approximative de « L », supportant une partie plane (47) approximativement parallèle à la surface du panneau de fixation et une butée (48) perpendiculaire à ladite surface, qui fait contact contre les bords du trou dans le panneau de fixation.

14. Écrou de compensation selon l'une quelconque des revendications précédentes, **caractérisé en ce que** ledit écrou de compensation est métallique et produit avec de l'acier au carbone traité thermiquement.

15. Écrou de compensation selon l'une quelconque des revendications précédentes, **caractérisé en ce que** ledit écrou de compensation est galvanisé.
